# EUROPÄISCHE PATENTSCHRIFT

(11) **EP 0 895 488 B1**
(45) Veröffentlichungstag und Bekanntmachung des Hinweises auf die Patenterteilung: **23.10.2002**
(21) Anmeldenummer: 98910622.4
(22) Anmeldetag: 12.02.1998
(51) Int. Cl.: B05D 3/02, B05D 7/02

(54) **VERFAHREN ZUM HERSTELLEN VON GLEITLACKBESCHICHTETEN PROFILEN FÜR DIE BAUINDUSTRIE UND GLEITLACKPROFIL**
METHOD FOR PRODUCING PROFILED SECTIONS COATED WITH LUBRICATING LACQUER FOR USE IN THE BUILDING INDUSTRY, AND PROFILED SECTION COATED WITH THE LUBRICATING LACQUER
PROCEDE DE PRODUCTION DE PROFILES RECOUVERTS DE LAQUE LUBRIFIANTE POUR L'INDUSTRIE DU BATIMENT ET PROFILE RECOUVERT DE LAQUE LUBRIFIANTE CORRESPONDANT

(30) Priorität: 21.02.1997 DE 19706804
(43) Veröffentlichungstag der Anmeldung: 10.02.1999
(73) Patentinhaber: SAAR-GUMMIWERK GmbH, 66687 Wadern (DE)
(72) Erfinder: KIENTZ, Paul, D-66687 Wadern (DE); BERENS, Werner, D-54317 Farschweiler (DE)
(74) Vertreter: Schulte, Jörg, Dipl.-Ing.
(86) Internationale Anmeldenummer: DE9800397
(87) Internationale Veröffentlichungsnummer: WO98036851

(56) Entgegenhaltungen:
- EP-A- 0 560 214
- PATENT ABSTRACTS OF JAPAN vol. 006, no. 026 (M-112), 16.Februar 1982 & JP 56 144143 A (YOKOHAMA RUBBER CO LTD:THE), 10.November 1981,
- DATABASE WPI Section Ch, Week 8628 Derwent Publications Ltd., London, GB; Class A32, AN 86-178844 XP002072785 & JP 61 111 176 A (TAKEMASA K)

## Beschreibung

Die Erfindung betrifft ein Verfahren zum Herstellen von einsetzbaren Profilen aus elastischem Material, insbesondere von Dichtungsprofilen für die Bauindustrie, die extrudiert und dann in der Salzschmelze bei 170 - 330 °C vulkanisiert werden und auf die außerdem eine den Einbau begünstigende Beschichtung aufgebracht und diese dann getrocknet wird. Die Erfindung betrifft außerdem eine Anlage zur Herstellung von gleitlackbeschichteten Profilen für die Bauindustrie mit einem Extruder einer Salzschmelze und einer Beschichtungs- und einer Druckstation. Schließlich betrifft die Erfindung ein Profil für den Einsatz, insbesondere Fensterprofil für die Bauindustrie mit einem Profilsteg und einem Dichtungskörper, dessen Oberfläche mit einer die Montage erleichternden Beschichtung versehen ist.

Aus Kautschuk, Kunststoffen oder entsprechenden Gemischen bestehende Profile werden für die unterschiedlichsten Bereiche benötigt, so unter anderem in der Bauindustrie für Fenster und dort sowohl für den Einbau der Scheiben in das eigentliche Profil und für die Rundumdichtung des beweglichen Fensterflügels gegenüber dem Profilrahmen. Die Profile werden extrudiert und dann in einer Salzschmelze vulkanisiert. Eine Anlage zum Herstellen solcher Profile, hier aus Kautschukmischungen bestehender Erzeugnisse ist beispielsweise aus der EP 560 214 bekannt. Nach der Vulkanisierung werden die Profile weiterbehandelt, insbesondere bedruckt und mit einer den Einbau und die Weiterverarbeitung begünstigenden Beschichtung versehen zu werden. Als Beschichtung für derartige Profile werden bisher Silikonemulsionen verwendet, die das eigentliche Fensterprofil nachgiebiger und insgesamt leichter händelbar machen sollen. Nachteilig bei diesen Beschichtungen aus Silikonemulsionen ist aber, dass diese Emulsionen nur eine begrenzte Lagerstabilität aufweisen, dass Veränderungen während des Herstellungsprozesses praktisch nicht möglich sind, so dass Kundenwünsche nicht berücksichtigt werden können oder aber nur mit entsprechend hohem Aufwand und dass vor allem die Verwendung der Silikonemulsion zu einer Verschmutzung der Produktionseinrichtung und auch von Personen beim Handling mit den silikonisierten Profilen führt. Nicht nur der Verarbeiter selbst hat mit den auftretenden Verschmutzungen zu kämpfen, sondern auch die nachfolgend tätigen Handwerker, weil die Silikonemulsion nachteilig alles verschmiert. Selbst die Hausfrau wird bei ihren Reinigungsarbeiten anschließend oft noch über Monate durch Rest der Silikonemulsion beeinträchtigt.

Der Erfindung liegt daher die Aufgabe zugrunde, ein Verfahren und eine Anlage zur wirtschaftlichen Herstellung von Profilen, insbesondere Fensterprofil mit einer Beschichtung zu schaffen, die eine einfache und saubere Verarbeitung erlaubt und die eine lange Lagerstabilität gewährleistet. Außerdem soll ein entsprechendes Profil geschaffen werden.

Die Aufgabe wird erfindungsgemäß dadurch gelöst, dass die Profile aus einem nicht lackabstoßenden Material hergestellt und nach Verlassen des Extruders und vor Eintritt in die Salzschmelze mit auf die unvulkanisierte Oberfläche aufgebrachten PU-, Silikon- oder Teflonverbindungen, deren Abkömmlingen, Modifikationen oder ihren Blends beschichtet werden.

Derartige Gleitlackbeschichtungen sind zwar grundsätzlich aus der Automobilindustrie bekannt, wobei dort die Profile zunächst extrudiert und vulkanisiert und dann erst nachbehandelt, d. h. statt mit der Silikonemulsion mit der Gleitlackschicht versehen werden. Der Gleitlack muss dann nachfolgend durch geeignete Einrichtungen ausgehärtet werden, was nicht nur erhebliche zusätzliche Investitionen erfordert, sondern auch nachteilig viel Platz und darüber hinaus auch noch Zeit, da die Aushärtung des Lacks sehr sorgfältig und bezüglich der gesamten Oberfläche des Profilkörpers vorgenommen werden muss. Beim erfmdungsgemäßen Verfahren dagegen wird der Gleitlack auf das noch nicht vulkanisierte Profil aufgebracht und dann in die Salzschmelze eingeführt, wo überraschend eine Vollaushärtung des Gleitlackes stattfindet, ohne dass der Gleitlack durch die Salzschmelze als solche beeinträchtigt wird. Nach Verlassen der Salzschmelze ist damit ein Profil vorhanden, das problemlos nachfolgend eingesetzt werden kann. Ein derart ausgebildetes Profil verfügt über erhebliche Vorteile. So ist zunächst einmal die trockene Oberfläche zu erwähnen und der niedrige Reibungskoeffizient. Bei deutlich verbesserten Lagerstabilitätswerten ist ein einfaches und sauberes Handling möglich, wobei die Gleitwirkung permanent erhalten bleibt, weil entgegen den silikonemulsionsbeschichteten Profilen der Gleitlack auf der Profiloberfläche erhalten bleibt. Es kommt zu einer Verzahnung der Profiloberfläche mit dem Gleitlack, so dass entsprechend lange Standzeiten vorhanden sind. Aufgrund dieser Fixierung des Gleitlackes auf der Profiloberfläche entfällt der bisher erhebliche Aufwand bei der Fensterreinigung nicht nur bei der Erstreinigung, sondern auch bei den nachfolgenden Reinigungsarbeiten. Vorteilhaft ist weiter, dass die Lackierarbeiten durch den auf das Profil aufgebrachten Gleitlack in keiner Weise behindert werden. Somit ist insgesamt ein Verfahren zur Verfügung gestellt worden, das für das hergestellte Profil erhebliche Vorteile mit sich bringt, darüber hinaus aber auch beim Herstellungsverfahren selbst, weil nämlich auf eine gesonderte Aushärtung des Gleitlackes verzichtet werden kann, weil dieser bereits in der Salzschmelze diesen Prozess durchläuft. Aufgrund der Aushärtung in der Salzschmelze ist darüber hinaus eine gleichförmige Aushärtung des Gleitlackes rund um die Oberfläche des Profils gegeben, selbst dann, wenn diese Oberfläche durch die Profilvorgabe nicht gleichmäßig durchgehend ausgebildet ist, sondern Einschnitte u. ä. Unterbrechungen aufweist.

Nach einer zweckmäßigen Ausbildung der Erfindung ist vorgesehen, dass die Wegstrecke zwischen Beschichtung und Salzschmelze ein Entweichen der flüchtigen Bestandteile ermöglichend 0,25 - 3 m, vorzugsweise 1 m lang bemessen wird. Diese Verfahrensausbildung gibt die Möglichkeit, Gleitlack zu verwenden, der auf Basis von PU-, Silikon- oder Teflonverbindungen, deren Abkömmlingen, Modifikationen oder ihre Blends mit Lösungsmitteln hergestellt worden ist. Dadurch dass die flüchtigen Bestandteile vorab, vor dem Eintauchen in die Salzschmelze entwichen sind, wird eine optimierte Aushärtung in der Salzschmelze selbst ermöglicht. Dabei hat sich herausgestellt, dass eine Wegstrecke von 0,25 - 3 m, vorzugsweise 1 m Länge ausreichend ist, um das Entweichen der flüchtigen Bestandteile zu sichern.

Eine weitere zweckmäßige Ausbildung sieht vor, dass der Gleitlack auf bestimmte Teile oder die gesamte Oberfläche des Profils aufgesprüht, aufgestrichen oder aufgerakelt wird. Damit wird verdeutlicht, dass der Gleitlack mit verschiedenen Techniken aufgetragen werden kann, wobei er eine Schichtdicke von 3 - 4 µ aufweisen soll, um die notwendige Lagerstabilität zu gewährleisten und auch die entsprechenden Standzeiten nach der Montage des Gesamtprofils. Die Auftragstechnik ermöglicht es dabei, auch nur Teilbereiche des Profils mit Gleitlack zu versehen oder aber auch die gesamte Oberfläche, wobei dann die Möglichkeit gegeben ist, das Profil durch ein Bad aus PU-, Silikon- oder Teflonverbindungen, deren Abkömmlingen, Modifikationen oder ihren Blends hindurchzuziehen oder in dieses einzutauchen.

Ist aus betriebstechnischen Gründen eine ausreichende Aushärtung des Gleitlakkes nicht durch die Salzschmelze gewährleistet, so kann nach einer zweckmäßigen Ausbildung der Erfindung das Profil nach dem Beschichten und vor Eintritt in die Salzschmelze und/oder nach dem Austritt aus der Salzschmelze mit Heißluft-, IR- oder UHF-Technik behandelt werden. Es handelt sich im Genaueren um eine Vor- bzw. Nachbehandlung des Profils, wobei aber wie weiter oben bereits erwähnt in der Regel die Salzschmelzenaushärtung ausreicht, in aller Regel sogar vorab unterbrochen werden kann, wenn dies der Vulkanisationsprozess zulässt. Überraschend ist im übrigen, dass der Vulkanisationsprozess durch die aufgebrachte Lackschicht nicht beeinträchtigt wird, wobei dafür allerdings die Schichtdicke wichtig ist, die gemäß der obigen Ausführung bei 3 - 4 µ liegen sollte.

Das Profil muss zur Identifikation mit verschiedenen Informationen versehen werden. Dazu ist es bekannt, auf das Profil entsprechende Hinweise und Daten aufzudrucken. Dabei muss darauf geachtet werden, dass diese Identifikationsmerkmale zumindest bis zur Montage erhalten bleiben. Dies wird gemäß einer Variante der Erfindung insbesondere dadurch gewährleistet, dass das Profil vor dem Beschichten bedruckt wird. Dies hat den großen Vorteil, dass dann die Identifikationsmerkmale unter der schützenden Gleitlackschicht angeordnet und sicher erkennbar sind. Sie können nicht versehentlich abgewischt oder sonstwie entfernt werden. Dies hat gleichzeitig für den Hersteller und den Kunden bei Qualitätsproblemen deutliche Vorteile.

Eine einfache und variable Verfahrensweise ist die, bei der das Profil mit einem Tintenstrahldrucker bedruckt wird, da auf diese Art und Weise nicht nur vom Profil selbst und der Beschichtung auf Kundenwünsche eingegangen werden kann, sondern auch bezüglich der gewünschten Informationen.

In der Automobilindustrie, wo gleitlackbeschichtete Profile wie weiter oben ausgeführt bereits bekannt sind, hat sich als nachteilig erwiesen, dass Lösungsmittel eingesetzt werden, die unter Umständen bei den nachfolgenden Prozessen eine Behinderung darstellen. Dies wird gemäß der Erfindung dadurch vermieden, dass als Gleitlack Systeme auf wässriger Basis eingesetzt werden. Diese lösungsmittelfreien Systeme lassen sich einwandfrei verarbeiten und können weder zu Veränderungen am Profil, noch an den mit den Profilen im Nachhinein ausgerüsteten Werkteilen bzw. Fenstersystemen führen.

Sowohl zur Vereinfachung der Montage, als auch zur Anpassung an die jeweiligen Einsatzbereiche ist es von Vorteil, wenn die aufgebrachte Beschichtung, d. h. also der Gleitlack mit Farbpartikeln angereichert wird. Durch derart farbige Gleitlacke können die Profile definiert lackiert werden, was wie erwähnt sowohl bei der Montage Vorteile erbringt, wie auch beim späteren Einsatz. Dementsprechend werden die Oberflächenteilbereiche mit unterschiedlich farbigem Gleitlack beschichtet, ohne dass im Nachhinein die Fensterreinigung oder sonstige Arbeiten behindert werden könnten. Rein theoretisch ist es sogar möglich, im Nachhinein auf die farbigen Gleitlackbereiche andere Gleitlacke oder ähnliche Systeme aufzubringen.

Zur Durchführung des Verfahrens dient eine Anlage, die einen Extruder, eine Salzschmelze, eine Beschichtungs- und eine Druckstation aufweist. Eine gleichmäßige und sichere Aushärtung und eine kostengünstige Aushärtung des aufgebrachten Gleitlackes wird dabei dadurch gewährleistet, dass die Beschichtungsstation zwischen Extruder und Salzschmelze und mit Abstand zur Salzwanne angeordnet ist. Durch Gewährleistung eines entsprechenden Abstandes zur Salzwanne wird gleichzeitig erreicht, dass auch lösungsmittelhaltige Gleitlacke eingesetzt werden können, deren flüchtige Bestandteile rechtzeitig vor Eintritt in die Salzschmelze entwichen sind. Blasenbildung und sonstige Probleme können dann nicht mehr auftreten. Diese Blasenbildung wird natürlich dann verhindert, wenn lösungsmittelfreie Systeme zum Einsatz kommen, aber selbst dann ist der Abstand zur Salzwanne vorteilhaft, weil eine gewisse Vorhärtung des Gleitlackes bei Raumtemperatur bereits eingetreten ist. Besonders vorteilhaft ist bei dieser Anlage, dass auf nachfolgende, umfangreiche Aushärtungsstationen völlig verzichtet werden kann und dass darüber hinaus die Möglichkeit besteht, die Beschichtungs- und Druckstation zu kombinieren, wie weiter hinten noch erläutert wird.

Die über die Druckstation auf das Profil aufgebrachten Daten und Informationen bleiben auch bei den nachfolgenden Bearbeitungsstationen völlig unbeeinflusst und auch nach Fertigstellung des Profils auf Dauer erhalten, wenn die Druckstation der Beschichtungsstation vorgeordnet ist, wie dies erfmdungsgemäß vorgeschlagen wird. Über die Druckstation erfolgt das Bedrucken des Profils im noch unvulkanisierten Zustand, wobei die nachfolgende Beschichtung sich dann schützend über den Druck legt und diesen auf Dauer erhält, da die zum Einsatz kommenden Gleitlacksysteme die Erkennbarkeit der aufgebrachten Druckinformationen gewährleistet.

Eine besonders einfache und auch kostengünstige Ausbildung der Druckstation ist gegeben, wenn diese als über einen PC gesteuerte Tintenstrahldrucker ausgebildet ist. Dabei hat diese Ausbildung den zusätzlichen großen Vorteil, dass eine Anpassung an Kundenwünsche problemlos möglich ist, da über den PC auch wechselnde Druckinformationen erfolgen können. Auf diese Weise kann praktisch jede einzelne Druckinformation von der nachfolgenden und vorhergehenden unterschiedlich sein.

Eine besonders vorteilhafte und gleichmäßige Beschichtung sichernde Ausbildung der Beschichtungsstation ist die, bei der sie als Sprühring, Druckpinsel oder Tauchbad ausgebildet ist. Der Sprühring gibt die Möglichkeit, die Beschichtung auch bei hoher Durchführgeschwindigkeit des Profils zu gewährleisten. Darüber hinaus ist praktisch jede Beschichtungsdicke vorgebbar und einzuhalten, so dass Profile hoher Qualität erzeugt werden können.

Weiter vorn ist darauf hingewiesen worden, dass die Aushärtung des Gleitlackes in der Salzschmelze erfolgt und zwar überraschend einfach und sicher und darüber hinaus auch noch gleichmäßig bezüglich des gesamten Umfanges des Profils. Sollte es aus irgendwelchen Gründen zu Problemen kommen oder sollten besonders harte Qualitätsansprüche vorhanden sein, so ist es möglich, der Salzschmelze eine Zusatzhärtung in Form einer Heißluft-, IR- oder UHF-Technik vor und/oder nachzuordnen.

Das mit Hilfe des Verfahrens und in der beschriebenen Produktionsanlage hergestellte Profil ist im Einzelnen weiter vorn bereits beschrieben. Aus diesem Grunde wird auf diese Beschreibung Bezug genommen und ergänzend und erläuternd festgehalten, dass Profile unterschiedlichster Formgebung, insbesondere solche für die Bauindustrie mit einer die Montage erleichternden Beschichtung versehen sind. Dabei besteht die Beschichtung aus einem auf den unvulkanisierten Profilkörper aufgebrachten Gleitlack, der in der Salzschmelze bei 170 - 330 °C aushärtend ausgebildet ist. Obwohl derartige Gleitlacke grundsätzlich bekannt sind, sind sie bisher nicht auf die beschriebene Art und Weise und für entsprechende Profile eingesetzt worden, weil das gezielte Aufbringen für schwierig bzw. für unmöglich gehalten wurde. Insbesondere hat sich herausgestellt, dass ein Gleitlack auf dem bereits vulkanisierten Profilkörper nur mit besonderen Behandlungsmethoden aufgebracht werden kann, d. h. insbesondere bezüglich der Aushärtung. Die guten Eigenschaften und Standzeiten ergeben sich beim erfindungsgemäßen Profil insbesondere auch dadurch, dass Gleitlack auf den unvulkanisierten Profilkörper aufgebracht wird, wo er sich "festkrallen" kann. In der nachfolgenden Salzschmelze wird er dann ohne zusätzlichen System- und Produktionsaufwand ausgehärtet und zwar rundum so sicher, dass sich die schon weiter vorn beschriebenen günstigen Eigenschaften und Vorteile ergeben.

Die für den Einbau ausreichende und darüber hinaus die Vulkanisation nicht behindernde Beschichtung weist eine Schichtdicke von 2 - 5 µ, vorzugsweise 3 - 4 µ auf. Wie schon erwähnt verkettet sich dabei der Gleitlack mit der Profiloberfläche vorteilhaft, so dass sich trotz der geringen Schichtdicke hohe Standzeiten und eine parmanente Gleitdeckung ergibt.

Aus rein optischen Gründen, aber auch zur Vereinfachung der Montage, kann es vorteilhaft sein, wenn die Beschichtung farbig ist. Insbesondere können sich so die entsprechend behandelten Profile vorteilhaft, beispielsweise im Fensterbereich, einsetzen lassen, wenn die farbige Beschichtung quasi eine Integrierung mit dem zugeordneten Profil sicherstellt. Dabei wird die Beschichtung partiell auf vorgegebene Profilgeometrien aufgebracht, um so insbesondere auch die Montage zu optimieren.

Aufgrund der beschriebenen Weglänge zwischen Beschichtungsstation und Salzschmelze bzw. Salzwanne wird auch bei lösungsmittelgebundenen Gleitlacken die Bildung von Blasen ausgeschlossen. Dies ist insbesondere aber dann gegeben, wenn der die Beschichtung bildende Gleitlack lösungsmittelfrei aufgebaut ist. Darüber hinaus ist die Verwendung derartiger Gleitlacke umweltfreundlich und erfordert keine gesonderte Absaugung und ähnliche Hilfsmaßnahmen.

Die Erfindung zeichnet sich insbesondere dadurch aus, dass bei Einsatz des Verfahrens, der Anlage und des entsprechend hergestellten Profils ein niedriger Reibungskoeffizient der Oberfläche gewährleistet ist. Die Oberfläche ist immer trocken und insbesondere ist ein sehr gutes Handling, ohne die Gefahr von irgendwelchen Verschmutzungen gegeben. Hervorzuheben ist die lange Lagerstabilität und die permanente Gleitwirkung, weil der Gleitlack mit der Oberfläche des Profils quasi eine Einheit bildet und das auf lange Zeit. Ein gleiches Aussehen für co- oder triextrudierte Profile für die verschiedenen Mischungen des Ausgangsproduktes sind sowohl vom Gebrauch wie auch vom Verkauf her vorteilhaft. Es sind prozesssichere Applikationen möglich und darüber hinaus kann der Gleitlack partiell auf diversen Profilgeometrien aufgebracht werden und zwar in durchsichtiger Ausführung, wie auch in farbiger Ausführung, wobei auch bei der farbigen Ausführung des Gleitlackes sichergestellt ist, dass die darunterliegenden Druckinformationen sichtbar bleiben. Vorteilhaft ist schließlich, dass die Fensterreinigung durch Silikonreste bzw. durch Beschichtungsreste nicht mehr behindert wird, sondern dass sie vielmehr einfach und ohne Probleme durchgeführt werden kann. Selbst bei einem Überstreichen über das eigentliche Profil mit einem nassen Lappen oder einem sonstigen Reinigungsteil, führt zu keinerlei Beeinträchtigung und vor allem bleibt auch das eigentliche Profil von derartigen Feuchtigkeiten unbeeinflusst, weil es eben durch den Gleitlack auch gleichzeitig versiegelt ist. Wird das Fenster gestrichen und zwar nach dem Ersteinsatz oder irgendwann später einmal, so ist eine Beeinträchtigung der Lackierarbeiten nicht zu befürchten, weil keinerlei Schmierreste von der Beschichtung überiggeblieben sind. Vielmehr haftet der Gleitlack wie schon mehrfach erwähnt auf dem Profil. Vorteilhaft ist darüber hinaus, dass der durch Sprühen oder durch Auftragen mit einem Druckpinsel oder durch Tauchen oder durch ähnliche Maßnahmen aufgebrachte Gleitlack durch die nachfolgende Salzschmelze so gleichmäßig ausgehärtet wird, dass weder Blasen entstehen können, noch ungleichmäßige Aushärtungsbereiche, so dass eine immer gleich wirkende Gleitwirkung und Schutzwirkung durch eine derartige Beschichtung sichergestellt wird. Bezüglich der Umweltfreundlichkeit ist hervorzuheben, dass bei einem derartigen Verfahren auch mit lösungsmittelfreien Gleitlacken gearbeitet werden kann, die vor allem umwelttechnisch vorteilhaft sind, darüber hinaus aber auch wegen der fehlenden Lösungsmittel problemlos in der Salzschmelze ausgehärtet werden können.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
Fig. 1 ein Profil im Schnitt und
Fig. 2 eine schematische Wiedergabe der Produktionsanlage.

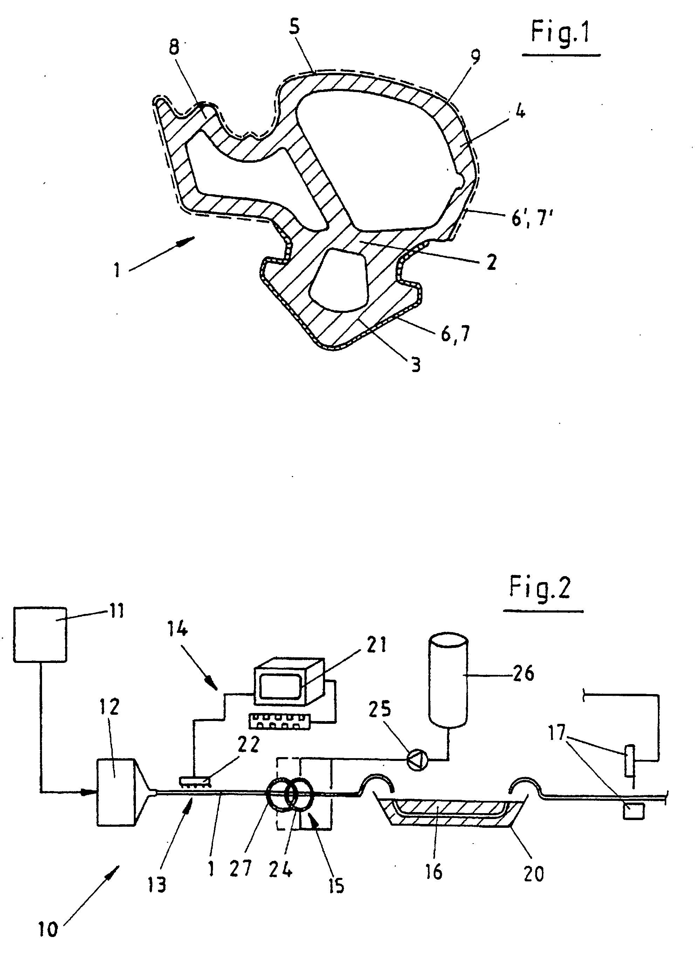

Bei dem in Fig. 1 wiedergegebenen Profil handelt es sich um ein elastisches Dichtungsprofil 1 zur Abdichtung von Fenstern und ähnlichen Verschlüssen, dessen Verankerungskeil bzw. Profilsteg 3 in die Nut des Kunststoffprofils einsetzbar ist. Die entsprechend gewölbt ausgebildete Dichtlippe 9 legt sich gegen den Rahmen oder die Glasscheibe an und dichtet ab, wobei dem Dichtwulst 8 endseitig eine Nase zugeordnet ist. Diese Teile des Dichtungsprofils 1 bestehen aus einem thermoplastischen Kunststoff. Sie sind mit dem Halbzeug des Verschlusses bzw. des Fensters kurz nach dem Extrudieren schon beim Hersteller zu verbinden. Auch bei einer derartigen Vorbereitung ist es erforderlich das entsprechende Profil 1 in die hier nicht wiedergegebene Nut einzudrücken, wozu der Profilsteg 3 des Profilkörpers 2 entsprechend verformt werden muss. Dieses Verformen und Eindrücken wird dadurch wesentlich erleichtert, dass der Profilsteg 3 in diesem Bereich der Oberfläche 5 des Dichtungskörpers 4 mit einer Beschichtung 6 versehen ist. Bei dieser Beschichtung 6 handelt es sich um einen Gleitlack 7, der entweder nur in diesem Bereich, d. h. im Bereich des Profilsteges 3 aufgebracht ist oder über die gesamte Oberfläche, wie dies durch die Bezugszeichen 6' und 7' angedeutet ist. Dann sind also auch der Dichtwulst 8 und die Dichtlippe 9 mit einer entsprechenden Beschichtung 6 in Form des Gleitlackes 7 überdeckt, so dass sie nicht nur eine trockene Oberfläche 5 wahren, sondern insbesondere über einen niedrigen Reibungskoeffizienten verfügen, der für die weitere Handhabung wichtig ist. Außerdem kann es weder zu einem Abschaben des Kautschukmaterials, noch zu einem undicht werden der entsprechenden Dichtung durch Riefen o. ä. kommen.

Es versteht sich, dass das eigentliche Profil 1 bzw. der Profilkörper 2 auch andere Formen aufweisen kann, wobei der Profilkörper 2 durch die Form des Extruders 12 vorgegeben ist, der in Fig. 2 angedeutet ist. Bei dieser Produktionsanlage 10 wird der Kautschuk oder das sonstige Ausgangsprodukt in einem Silo 11 vorgehalten und von dort dem Extruder 12 zugeführt. Zwischen dem Extruder 12 und der notwendigen Vulkanisation in der Salzschmelze 16 ist eine Behandlungsstrecke 13 vorgesehen, die die Druckstation 14 und die Beschichtungsstation 15 umfasst.

Bei der in Fig. 2 schematisch wiedergegebenen Produktionsanlage 10 wird also das Profil 1 nach Verlassen des Extruders 12 und vor Eintritt in die Salzwanne 20 zunächst einmal über den über einen PC 21 gesteuerten Tintenstrahldrucker 22 mit den notwendigen Identifikationsmerkmalen, d. h. Buchstaben und Zahlen, versehen. Der Tintenstrahldrucker 22 und der PC 21 geben hierbei die Möglichkeit, die entsprechenden Identifikationsmerkmale sehr schnell, kurzfristig und auch umfangreich zu verändern, so dass hier Kundenwünschen problemlos Rechnung getragen werden kann.

Nach dem Bedrucken über den Tintenstrahldrucker 22 wird das Profil 1 durch einen Sprühring 24 geführt, der hier die Beschichtungsstation 15 darstellt. Im Sprühring oder über den Sprühring 24 wird ein Gleitlack aus dem Lacktank 26 und über die Pumpe 25 auf das Profil 1 aufgesprüht und zwar in einer vorgebbaren Schichtdicke.

Als Gleitlack werden z. B. PU-, Silikon- oder Teflonverbindungen, deren Abkömmlinge, Modifikationen oder ihre Blends verwandt und zwar mit jeweiligen Lösungsmitteln. Durch eine entsprechende Ausbildung der Behandlungsstrecke 13 bzw. durch die entsprechende Länge ist sichergestellt, dass die wesentlichen Teile dieses Lösungsmittels sich bereits wieder entfernt haben, bevor das Profil 1 in die Salzschmelze 16 der Salzwanne 20 eintaucht.

Angedeutet ist in Fig. 2, dass das Profil 1 die Salzschmelze 16 durchläuft und dann einer Schneidstation 17 zugeführt wird, wo das Profil 1 entsprechend abgelängt wird. Mit Verlassen der Salzschmelze 16 ist der Gleitlack bereits ausgehärtet und zwar unabhängig davon, ob er Lösungsmittel enthalten hat oder lösungsmittelfrei war. Blasen sind nicht vorhanden und ein Ablängen in der Schneidstation 17 ist problemlos möglich, so dass anschließend die einzelenen Profilstücke für die Weiterverarbeitung zur Verfügung stehen. Es ist natürlich auch möglich, das Profil in entsprechender Länge auf Transportspulen aufzuwickeln und dann den Kunden zuzuführen.

Fig. 2 verdeutlicht weiter, dass die Möglichkeit besteht, mehrere Sprühringe 24, 27 hintereinander anzuordnen, um so entweder zwei Schichten nacheinander auf das Profil aufzubringen oder aber um unterschiedliche Bereiche des Profils mit unterschiedlich farblichen Beschichtungen 6 zu versehen.

Alle genannten Merkmale, auch die den Zeichnungen allein zu entnehmenden, werden allein und in Kombination als erfindungswesentlich angesehen.

## Patentansprüche

1. Verfahren zum Herstellen von einsetzbaren Profilen aus elastischem Material, insbesondere von Dichtungsprofilen für die Bauindustrie, die extrudiert und dann in der Salzschmelze bei 170 - 330 °C vulkanisiert werden und auf die außerdem eine den Einbau begünstigende Beschichtung aufgebracht und diese dann getrocknet wird,
**dadurch gekennzeichnet,**
**dass** die Profile aus einem nicht lackabstoßenden Material hergestellt und nach Verlassen des Extruders und vor Eintritt in die Salzschmelze mit auf die unvulkanisierte Oberfläche aufgebrachten PU-, Silikon- oder Teflonverbindungen, deren Abkömmlingen, Modifikationen oder ihren Blends beschichtet werden.

2. Verfahren nach Anspruch 1,
**dadurch gekennzeichnet,**
**dass** die Wegstrecke zwischen Beschichtung und Salzschmelze ein Entweichen der flüchtigen Bestandteile ermöglichend 0,25 - 3 m, vorzugsweise 1 m lang bemessen wird.

3. Verfahren nach einem der vorhergehenden Ansprüche,
**dadurch gekennzeichnet,**
**dass** der Gleitlack auf bestimmte Teile oder die gesamte Oberfläche des Profils aufgesprüht, aufgestrichen oder aufgerakelt wird.

4. Verfahren nach einem der vorhergehenden Ansprüche,
**dadurch gekennzeichnet,**
**dass** das Profil durch ein Bad aus PU-,Silikon- oder Teflonverbindungen, deren Abkömmlingen, Modifikationen oder ihren Blends hindurchgezogen oder in dieses eingetaucht wird.

5. Verfahren nach einem der vorhergehenden Ansprüche,
**dadurch gekennzeichnet,**
**dass** das Profil nach dem Beschichten und vor Eintritt in die Salzschmelze und/oder nach dem Austritt aus der Salzschmelze mit Heißluft-, IR- oder UHF-Technik behandelt wird.

6. Verfahren nach einem der vorhergehenden Ansprüche,
**dadurch gekennzeichnet,**
**dass** das Profil vor dem Beschichten bedruckt wird.

7. Verfahren nach Anspruch 6,
**dadurch gekennzeichnet,**
**dass** das Profil mit einem Tintenstrahldrucker bedruckt wird.

8. Verfahren nach einem der vorhergehenden Ansprüche,
**dadurch gekennzeichnet,**
**dass** als Gleitlack Systeme auf wässriger Basis eingesetzt werden.

9. Verfahren nach einem oder mehreren
der vorhergehenden Ansprüche,
**dadurch gekennzeichnet,**
**dass** die aufgebrachte Beschichtung, d. h. also der Gleitlack mit Farbpartikeln angereichert wird.

10. Verfahren nach einem oder mehreren
der vorhergehenden Ansprüche,
**dadurch gekennzeichnet,**
**dass** die Oberflächenteilbereiche mit unterschiedlich farbigem Gleitlack beschichtet werden.

11. Anlage zur Herstellung von gleitlackbeschichteten Profilen für die Bauindustrie und damit zur Durchführung des Verfahrens nach Anspruch 1 bis Anspruch 10, mit einem Extruder (12) einer Salzschmelze (16) und einer Beschichtungs-(15) und einer Druckstation (14),
**dadurch gekennzeichnet,**
**dass** die Beschichtungsstation (15) zwischen Extruder (12) und Salzschmelze (16) und mit Abstand zur Salzwanne (20) angeordnet ist.

12. Anlage nach Anspruch 11,
**dadurch gekennzeichnet,**
**dass** die Druckstation (14) der Beschichtungsstation (15) vorgeordnet ist.

13. Anlage nach Anspruch 12,
**dadurch gekennzeichnet,**
**dass** die Druckstation (14) als über einen PC (21) gesteuerter Tintenstrahldrucker (22) ausgebildet ist.

14. Anlage nach einem der vorhergehenden Ansprüche 11 bis 13,
**dadurch gekennzeichnet,**
**dass** die Beschichtungsstation (15) als Sprühring (24), Druckpinsel oder Tauchbad ausgebildet ist.

15. Anlage nach einem der vorhergehenden Ansprüche 11 bis 14,
**dadurch gekennzeichnet,**
**dass** der Salzschmelze (16) eine Zusatzhärtung in Form einer Heißluft-, IR- oder UHF-Technik vor und/oder nachgeordnet ist.

16. Profil für den Einsatz, insbesondere Fensterprofil, für die Bauindustrie mit einem Profilsteg (3) und einem Dichtungskörper (4), dessen Oberfläche (5) mit einer die Montage erleichternden Beschichtung (6) versehen ist,
**dadurch gekennzeichnet,**
**dass** die Beschichtung (6) aus einem auf den unvulkanisierten Profilkörper (2) aufgebrachten Gleitlack (7) besteht, der in der Salzschmelze (16) bei 170 - 330 °C aushärtend ausgebildet ist.

17. Profil nach Anspruch 16,
**dadurch gekennzeichnet,**
**dass** die Beschichtung (6) eine Schichtdicke von 2 - 5 µ, vorzugsweise 3 - 4 µ aufweist.

18. Profil nach einem der vorhergehenden Ansprüche 16 bis 17,
**dadurch gekennzeichnet,**
**dass** die Beschichtung (6) farbig ist.

19. Profil nach einem der vorhergehenden Ansprüche 16 bis 18,
**dadurch gekennzeichnet,**
**dass** die Beschichtung (6) patiell auf vorgegebene Profilgeometrien aufgebracht ist.

20. Profil nach einem der vorhergehenden Ansprüche 16 bis 19,
**dadurch gekennzeichnet,**
**dass** der die Beschichtung (6) bildende Gleitlack (7) lösungsmittelfrei aufgebaut ist.

## Claims

1. Method for producing usable profiles from elastic material, in particular sealing profiles for the construction industry which are extruded and then vulcanised in molten salt bath at 170 to 330°C and to which a coating for assisting installation is also applied and then dried, **characterised in that** the profiles are produced from a material which does not repel lacquer and after leaving the extruder and prior to entry into the molten salt bath are coated with polyurethane, silicone or Teflon compounds, derivatives or modifications thereof or their blends applied to the unvulcanised surface.

2. Method according to claim 1, **characterised in that** the distance between coating and molten salt bath allowing the volatile components to escape is 0.25 to 3 m, preferably 1 m long.

3. Method according to any of the preceding claims, **characterised in that** the lubricating lacquer is sprayed, brushed or doctored onto certain portions or the entire surface of the profile.

4. Method according to any of the preceding claims, **characterised in that** the profile is pulled through a bath of polyurethane, silicone or Teflon compounds, derivatives or modifications thereof or their blends or is immersed therein.

5. Method according to any of the preceding claims, **characterised in that** after coating and prior to entry into the molten salt bath and/or after exiting the molten salt bath the profile is treated by a hot air, IR or UHF technique.

6. Method according to any of the preceding claims, **characterised in that** the profile is imprinted prior to coating.

7. Method according to claim 6, **characterised in that** the profile is imprinted using an ink jet printer.

8. Method according to any of the preceding claims, **characterised in that** aqueous systems are used as lubricating lacquer.

9. Method according to any one or more of the preceding claims, **characterised in that** the applied coating, i.e. the lubricating lacquer, is enriched with dye particles.

10. Method according to any one or more of the preceding claims, **characterised in that** the surface partial regions are coated with differently coloured lubricating lacquer.

11. Plant for producing lubricating lacquer-coated profiles for the construction industry and therefore for carrying out the method according to claim 1 to claim 10, with an extruder (12), a molten salt bath (16) and a coating station (15) and a printing station (14), **characterised in that** the coating station (15) is arranged between extruder (12) and molten salt bath (16) and at a distance from the salt trough (20).

12. Plant according to claim 11, **characterised in that** the printing station (14) is arranged upstream of the coating station (15).

13. Plant according to claim 12, **characterised in that** the printing station (14) is designed as an ink jet printer (22) controlled via a PC (21).

14. Plant according to any of the preceding claims 11 to 13, **characterised in that** the coating station (15) is designed as a spraying ring (24), pressure brush or immersion bath.

15. Plant according to any of the preceding claims 11 to 14, **characterised in that** additional curing in the form of a hot air, IR or UHF technique precedes and/or succeeds the molten salt bath (16).

16. Profile for use, in particular window profile, for the construction industry with a profile web (3) and a sealing member (4), the surface (5) of which is provided with a coating (6) facilitating assembly, **characterised in that** the coating (6) consists of a lubricating lacquer (7) applied to the non-vulcanised profile member (2), the lubricating lacquer being designed to cure in the molten salt bath (16) at 170 to 330°C.

17. Profile according to claim 16, **characterised in that** the coating (6) has a layer thickness of 2 to 5 µ, preferably 3 to 4 µ.

18. Profile according to any of the preceding claims 16 to 17, **characterised in that** the coating (6) is coloured.

19. Profile according to any of the preceding claims 16 to 18, **characterised in that** the coating (6) is applied partially to predetermined profile geometries.

20. Profile according to any of the preceding claims 16 to 19, **characterised in that** the lubricating lacquer (7) forming the coating (6) is free from solvent.

## Revendications

1. Procédé de fabrication de profilés en matière élastique, pouvant être insérés, en particulier de profilés d'étanchéité pour l'industrie de la construction, qui sont extrudés puis vulcanisés dans un bain de sels fondus entre 170 et 330 °C, et sur lesquels est appliqué en outre un revêtement favorisant le montage, et celui-ci est ensuite séché,
**caractérisé**
**en ce que** les profilés sont fabriqués dans une matière qui ne repousse pas la laque, et sont recouverts, après la sortie de l'extrudeuse et avant l'entrée dans le bain de sels fondus, de composés de PU, silicone ou Téflon, de leurs dérivés, modifications ou de leurs mélanges, appliqués sur la surface non vulcanisée.

2. Procédé selon la revendication 1,
**caractérisé**
**en ce que** le parcours entre l'application du revêtement et les sels fondus présente une longueur de 0,25 à 3 mètres, de préférence de 1 mètre, qui permet un dégagement des constituants volatils.

3. Procédé selon l'une des revendications précédentes,
**caractérisé**
**en ce que** la laque de glissement est pulvérisée, appliquée à la brosse ou à la spatule sur des parties déterminées ou sur toute la surface du profilé.

4. Procédé selon l'une des revendications précédentes,
**caractérisé**
**en ce que** le profilé est passé à travers un bain de composés de PU, de silicone ou de Téflon, de leurs dérivés, modifications, ou de leurs mélanges, ou est immergé dans celui-ci.

5. Procédé selon l'une des revendications précédentes,
**caractérisé**
**en ce qu'**après l'application du revêtement et avant entrée dans le bain de sels fondus, et/ou après la sortie du bain de sels fondus, le profilé est traité par une technique à air chaud, infrarouge ou UHF.

6. Procédé selon l'une des revendications précédentes,
**caractérisé**
**en ce que** le profilé est imprimé avant d'être recouvert.

7. Procédé selon la revendication 6,
**caractérisé**
**en ce que** le profilé est imprimé au moyen d'une imprimante à jet d'encre.

8. Procédé selon l'une des revendications précédentes,
**caractérisé**
**en ce qu'**on utilise comme laque de glissement des systèmes à base aqueuse.

9. Procédé selon une ou plusieurs des revendications précédentes,
**caractérisé**
**en ce que** le revêtement appliqué, c'est-à-dire donc la laque de glissement, est enrichi en particules colorées.

10. Procédé selon une ou plusieurs de revendications précédentes,
**caractérisé**
**en ce que** des zones partielles de la surface sont recouvertes d'une laque de glissement de couleur différente.

11. Installation pour la fabrication de profilés revêtus d'une laque de glissement pour l'industrie de la construction et donc pour la mise en oeuvre du procédé selon la revendication 1 à la revendication 10, comportant une extrudeuse(12), un bain de sels fondus (16) et un poste d'application de revêtement (15) et un poste d'impression (14),
**caractérisée**
**en ce que** le poste d'application de revêtement (15) est disposé entre l'extrudeuse (12) et le bain de sels fondus (16) et à distance du bac à sels (20).

12. Installation selon la revendication 11,
**caractérisée**
**en ce que** le poste d'impression (14) est disposé en amont du poste de revêtement (15).

13. Installation selon la revendication 12,
**caractérisée**
**en ce que** le poste d'impression (14) est réalisé en tant qu'imprimante à jet d'encre (22) commandée par un ordinateur individuel (21).

14. Installation selon l'une des revendications 11 à 13,
**caractérisée**
**en ce que** le poste d'application de revêtement (15) est réalisé en tant qu'anneau de pulvérisation (24), pinceau sous pression ou bain d'immersion.

15. Installation selon l'une des revendications précédentes 11 à 14,
**caractérisée**
**en ce qu'**en amont et/ou en aval du bain de sels fondus (16) est prévu un durcissement supplémentaire sous la forme d'une technique à air chaud, à infrarouge ou UHF.

16. Profilé à insérer, en particulier profilé de fenêtre, destiné à être utilisé dans l'industrie de la construction, comportant une âme de profilé (3) et un corps d'étanchéité (4) dont la surface (5) est pourvue d'un revêtement (6) qui facilite le montage,
**caractérisé**
**en ce que** le revêtement (6) est constitué d'une laque de glissement (7) appliquée sur le corps de profilé (2) non vulcanisé, et qui est prévue de manière à durcir dans le bain de sels fondus (16) entre 170 et 330 °C.

17. Profilé selon la revendication 16,
**caractérisé**
**en ce que** le revêtement (6) présente une épaisseur de couche de 2 à 5 µ, de préférence de 3 à 4 µ.

18. Profilé selon l'une des revendications précédentes 16 ou 17,
**caractérisé**
**en ce que** le revêtement (6) est coloré.

19. Profilé selon l'une des revendications précédentes 16 à 18,
**caractérisé**
**en ce que** le revêtement (6) est appliqué partiellement sur des géométries de profilé prédéfinies.

20. Profilé selon l'une des revendications précédentes 16 à 19,
**caractérisé**
**en ce que** la laque de glissement (7) formant le revêtement (6) ne contient pas de solvant.
